(19) Europäisches Patentamt
European Patent Office
Office européen des brevets

(11) **EP 2 855 039 B1**

(12) **EUROPÄISCHE PATENTSCHRIFT**

(45) Veröffentlichungstag und Bekanntmachung des Hinweises auf die Patenterteilung:
**11.05.2016 Patentblatt 2016/19**

(21) Anmeldenummer: **13736743.9**

(22) Anmeldetag: **29.05.2013**

(51) Int Cl.:
**B21B 3/02** (2006.01)

(86) Internationale Anmeldenummer:
**PCT/AT2013/050114**

(87) Internationale Veröffentlichungsnummer:
**WO 2013/177604 (05.12.2013 Gazette 2013/49)**

(54) **METALLBAND SOWIE VERFAHREN ZUR HERSTELLUNG EINES OBERFLÄCHENPOLIERTEN METALLBANDES**

METAL STRIP AND METHOD FOR PRODUCING A SURFACE-POLISHED METAL STRIP

BANDE DE MÉTAL AINSI QUE PROCÉDÉ DE FABRICATION D'UNE BANDE DE MÉTAL À SURFACE POLIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2012 AT 6342012**

(43) Veröffentlichungstag der Anmeldung:
**08.04.2015 Patentblatt 2015/15**

(73) Patentinhaber: **Berndorf Band GmbH
2560 Berndorf (AT)**

(72) Erfinder:
• **BADER, Dieter
A-2560 Berndorf (AT)**
• **SCHUSTER, Roland
A-2560 Berndorf (AT)**

(74) Vertreter: **Burger, Hannes
Anwälte Burger & Partner
Rechtsanwalt GmbH
Rosenauerweg 16
4580 Windischgarsten (AT)**

(56) Entgegenhaltungen:
**WO-A1-2007/082994 WO-A2-2006/024526**

EP 2 855 039 B1

**Beschreibung**

Die Erfindung betrifft ein Metallband, insbesondere ein Edelstahlband, welches eine Außenfläche sowie eine Innenfläche definiert, wobei an zumindest einer der Flächen mehrere Messflächen insbesondere auf Basis der DIN EN 10247 -Juli 2007 - zur Ermittlung des Gehaltes nichtmetallischer Einschlüsse festgelegt werden, und dabei jeweils ein vollständiges Abrastern aller Messflächen bei einer Vergrößerung von 200:1 erfolgt.

Es sind schon verschiedene Metallbänder in einer hochwertigen Güte in Bezug auf Werkstoffeigenschaften sowie Oberflächengüte bekannt geworden, welche in unterschiedlichsten Anwendungsfällen eingesetzt werden. Diese genügen jedoch nicht mehr den heutigen hohen Anforderungen.

Aus der KR 10-2009-0110082 ist die Herstellung von breiteren Folienabgüssen auf Metallbänder bekannt geworden. Zur Verbreiterung der Abgussoberfläche auf dem Metallband ist dabei vorgesehen, dass an den Seitenrändern des Trägerbandes zusätzliche Längsstreifen mit angeschweißt werden, um so die Breite des herzustellenden Folienmaterials vergrößern zu können. Damit ist es zwar möglich, eine größere Abgussbreite zu erzielen, jedoch konnte dabei nicht bei allen Anwendungsfällen ein ausreichendes Abgussergebnis erzielt werden.

Ein Band der oben genannten Art ist aus der WO2006/024526 bekannt geworden.

Der vorliegenden Erfindung liegt die Aufgabe zugrunde, ein Metallband mit einer sehr hohen Reinheit und damit verbunden einer sehr hohen Oberflächengüte zu schaffen sowie ein Verfahren zu Herstellung eines oberflächenpolierten Metallbandes anzugeben.

Diese Aufgabe der Erfindung wird durch die Merkmale des Anspruches 1 gelöst.

Der sich durch die Merkmale des Anspruches 1 ergebende Vorteil liegt darin, dass mit dieser geringen Einschlussanzahl eine sehr hohe Oberflächengüte des Metallbandes mit einer nahezu durchgängigen und einheitlichen, metallischen Oberfläche geschaffen wird, welche damit für den Einsatz des Metallbandes als Trägerband (Prozessband) für den Abguss von Folienmaterial bestens geeignet ist. In der vorliegenden Anmeldung werden die Begriffe "Trägerband" und "Prozessband" synonym verwendet, da das Band nicht nur den Film bzw. die Folie trägt sondern der Film bzw. die Folie auf dem Band einen Prozess durchläuft, der von dem Band beeinflusst bzw. unterstützt wird. So kann das Band insbesondere von der Unterseite beheizt werden und somit zur Wärmeübertragung auf den Film bzw. die Folie dienen. Durch die erfindungsgemäße Lösung wird auch erreicht, dass über die gesamte Breite des Metallbandes eine einheitliche Werkstoffqualität durchgängig zur Verfügung steht Damit werden auch die bei der Herstellung des Vorproduktes bzw. Vormaterials zulässigen Toleranzen in der Werkstoffqualität nicht untereinander vermischt. Damit werden für das herzustellende Produkt, bei welchem das Metallband als Auflage- bzw. Trägermaterial dient, durchgängig einheitliche und gleiche Werkstoffqualitäten zur Abstützung bereitgestellt.

Weiters kann damit aber auch noch eine wesentlich bessere Oberflächengüte bei einem nachfolgenden Poliervorgang erzielt werden, da die Größe und Anzahl der nichtmetallischen Einschlüsse auf ein vertretbares Minimum reduziert ist und damit Oberflächenfehler nahezu vermieden sind. Damit wird ein störungsfreies Abbild der Metalloberfläche an dem herzustellenden Folienmaterial erzielt. Dabei kann unter anderem ein Polymer-Film hergestellt werden, welcher später als optischer Film oder bei LCD-Bildschirmen zum Einsatz gelangt. Durch diese hohe Reinheit und ungestörte Oberflächengüte des Metallbandes kann in Verbindung mit dem Einsatz des Metallbandes als Auflage bzw. Abstützung des herzustellenden Folienmaterials die Güte desselben bei der Herstellung noch wesentlich verbessert werden. Damit können die von der Oberfläche des Metallbandes auf das Folienmaterial übertragenen Abbilder der Einschlüsse sehr gering gehalten werden, sodass damit ein hochwertiges Produkt herstellbar ist.

Vorteilhaft ist auch eine weitere Ausführungsform nach Anspruch 2 oder 3, da so auch die Anzahl der flächenmäßig bzw. voluminös größeren Einschlüsse ebenfalls sehr gering gehalten wird und deshalb die Oberfläche des Metallbandes in ihrer Gesamtheit nur eine sehr geringe Anzahl an Störungsflächen aufweist. Dadurch kann auch im Zuge des Poliervorganges eine Beschädigung durch herausbrechende Einschlüsse nahezu vermieden werden, da diese flächenmäßig bzw. volumenmäßig gesehen nur einen sehr geringen Anteil an der Gesamtoberfläche des Metallbandes ausmachen.

Durch die Ausbildung nach Anspruch 4 ist es möglich, aufgrund der derzeit walztechnisch herstellbaren maximalen Breite des Blechstreifens dabei die Produktionsbreite durch seitliches Anfügen eines Randstreifens zur Herstellung des Folienmaterials zu vergrößern.

Nach einer anderen Ausführungsvariante gemäß Anspruch 5 wird erreicht, dass das so im Stoßbereich bzw. Verbindungsbereich des Mittelbandabschnittes mit dem Seitenbandabschnitt nahezu gleiche Wandstärken der beiden zu verbindenden Streifen vorliegen. Dadurch kann eine bessere Schweißnahtvorbereitung erfolgen, bei welcher auch ein geringerer Aufwand bei der gegenseitigen Ausrichtung der zu verbindenden Streifen erforderlich ist Damit kann ein flächigerer Übergang zwischen dem Mittelbandabschnitt und dem Seitenbandabschnitt erreicht und damit auch eine Stufenbildung vermieden werden.

Vorteilhaft ist auch eine Weiterbildung nach Anspruch 6, da so die zur Verfügung stehende Produktionsbreite noch weiters vergrößert werden kann.

Bei der Ausgestaltung nach Anspruch 7 ist von Vorteil, dass so die Überbreite für die herzustellende Folie einfach an unterschiedlichste Anwendungsbedingungen angepasst werden kann. Damit kann die Breite des über die Verbindungsnaht hinausreichenden Seitenbandabschnittes an das jeweilige Herstellungsverfahren angepasst werden.

Durch die Ausbildung nach Anspruch 8 kann so im Hinblick auf das herzustellende Produkt ein entsprechender Werkstoff zur Bildung des Metallbandes exakt darauf abgestimmt werden. Dies gilt insbesondere auf die beim Polierverfahren zu erzielende Oberflächengüte.

Vorteilhaft ist auch eine Ausbildung nach Anspruch 9, da so aufgrund des hochreinen Werkstoffes des Bandmaterials eine hochqualitative glatte Oberfläche für die Herstellung von hochwertigen Flachfolien erzielbar ist.

Gemäß einer Ausbildung, wie im Anspruch 10 beschrieben, kann so bereits während des Herstellungsverfahrens eine noch exaktere Ausbildung des Metallbandes geschaffen werden, da dieses bereits in einem umlaufenden Bearbeitungsverfahren bis hin zur endgültigen Fertigstellung bearbeitet werden kann. Damit wird nicht nur ein exakterer Parallellauf der Außenkanten sondern auch eine noch gleichmäßigere Banddicke erzielt. Damit kann aber auch noch zusätzlieh die Oberflächengüte in Verbindung mit dem hochreinen Werkstoff wesentlich verbessert werden.

Die Aufgabe der Erfindung kann aber unabhängig davon auch durch ein Verfahren gemäß den im Anspruch 11 angegebenen Merkmalen gelöst werden. Die sich aus der Merkmalskombination dieses Anspruches ergebenden Vorteile liegen darin, dass so basierend auf einem Metallband mit hoher Reinheit in Verbindung mit einem Oberflächenpoliervorgang ein Trägerband geschaffen wird, welches für die Herstellung von Folienmaterialien bestens geeignet ist und sich damit noch qualitativ hochwertigere Endprodukte herstellen lassen.

Zum besseren Verständnis der Erfindung wird diese anhand der nachfolgenden Figuren näher erläutert.

Es zeigen jeweils in stark schematisch vereinfachter Darstellung:

eine mögliche Ausbildung eines als Endlosband ausgebildeten Metallbandes;

einen Metallstreifen zur Bildung eines Metallbandes, in ebener Lage, in Draufsicht;

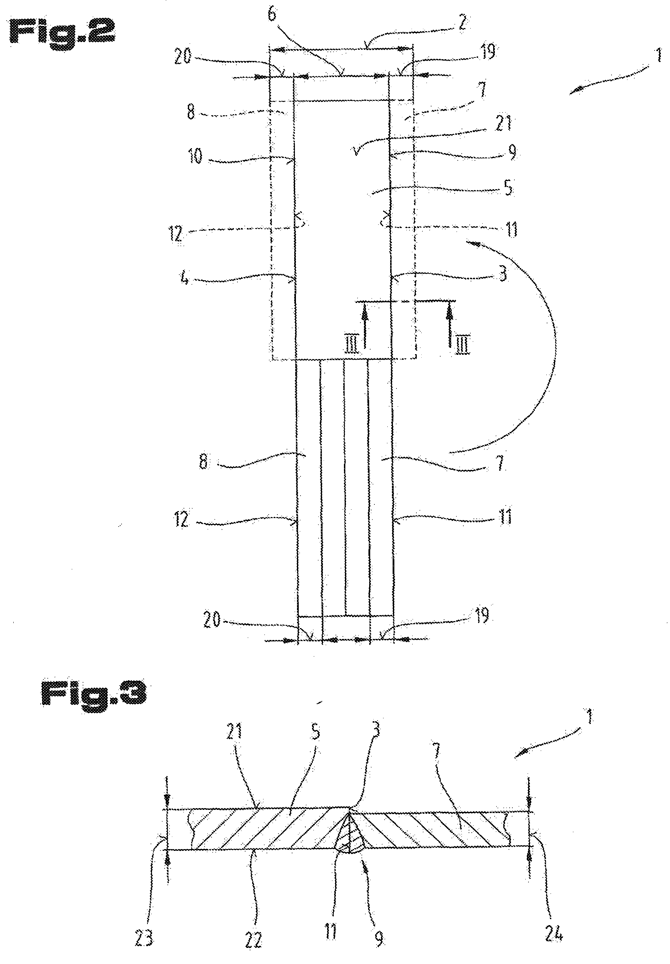

einen Querschnitt einer möglichen Ausbildung einer Längsverbindungsnaht eines Metallbandes gemäß den Schnittlinien III-III in Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

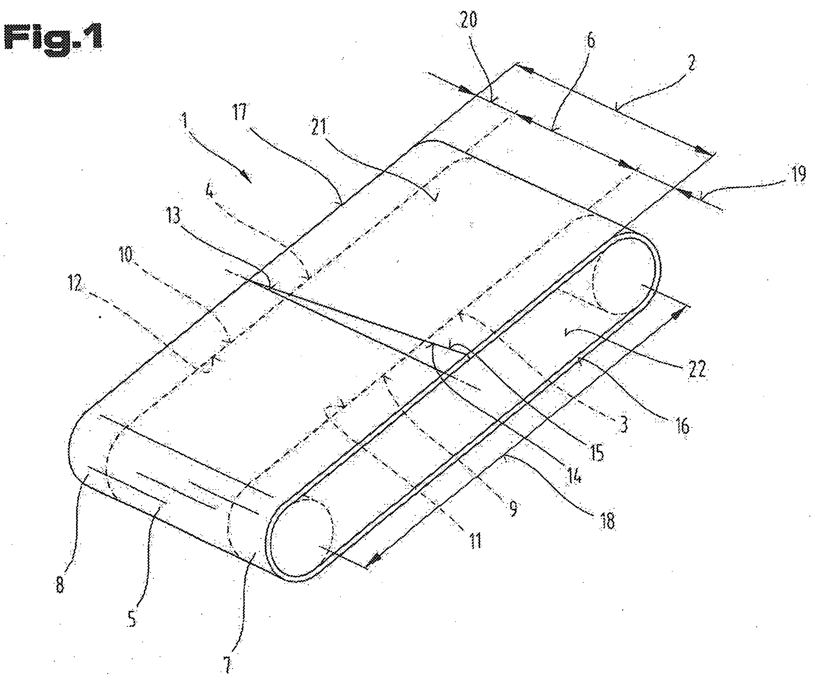

In der Fig. 1 ist schematisch vereinfacht ein Metallband 1, insbesondere ein endloses Stahlband, gezeigt, welches eine Gesamtbreite 2 quer zu seiner Längserstreckung aufweist, welche breiter ist als derzeit üblicherweise herstellbare Metallbänder 1 in gewissen Qualitäten und Zusammensetzungen.

Um diese größere Gesamtbreite 2 zu erzielen, wird das Metallband 1 in Richtung seiner Längserstreckung aus mehreren nebeneinander angeordneten Bandabschnitten gebildet. Dabei wird an gegenüberliegenden Längsseitenkanten 3, 4 eines Mittelbandabschnittes 5 mit einer Bandbreite 6 jeweils ein erster sowie zweiter Seitenbandabschnitt 7, 8 angeordnet und damit verbunden. Dies erfolgt durch vereinfacht dargestellte Längsverbindungsnähte 9, 10. Der Mittelbandabschnitt 5 mit seiner Bandbreite 6 wird aus einem vorgefertigten Blechabschnitt gebildet, wobei vor der Verbindung mit dem oder den Seitenbandabschnitten 7, 8 die Längsseitenkanten 3, 4 des Mittelbandabschnittes 5 sowie gegebenenfalls auch Längsseitenkanten 11, 12 der beiden Seitenbandabschnitte 7, 8 einem je nach gewähltem Verbindungsverfahren geeigneten Vorbereitungsverfahren unterzogen werden.

Bevorzugt werden derartige Metallbänder 1, insbesondere dann, wenn es sich dabei um Stahlbänder handelt, mittels eines Schweißvorganges verbunden. Weiters kann zur Herstellung des endlos umlaufenden Metallbandes 1 dieses an einander zugewendeten Stirnenden 13, 14 mit einer Querverbindungsnaht 15 verbunden werden.

Dabei wird meist so vorgegangen, dass der Mittelbandabschnitt 5 zuerst mit den beiden Seitenbandabschnitten 7, 8 in deren Längserstreckung verbunden wird und anschließend die Querverbindungsnaht 15 ausgebildet wird. Bei diesem hier gezeigten Ausführungsbeispiel ist die Querverbindungsnaht 15 unter einem vorbestimmten Winkel bezüglich außenliegender Längsseitenkanten 16, 17 des Metallbandes 1 verlaufend angeordnet. Es wäre aber auch möglich, eine rechtwinkelige Ausrichtung der Querverbindungsnaht 15 bezüglich der Längsseitenkanten 16, 17 zu wählen.

In Abhängigkeit von der Bandstärke des Metallbandes 1 und des dabei verwendeten Werkstoffes ist der Radius der Umlenkung des Bandes entsprechend darauf abzustimmen. Dabei ergibt sich bei einem geradlinig verlaufenden Bandverlauf des Metallbandes 1 zwischen voneinander distanzieren Umlenkstellen ein Abstand 18 zwischen diesen. Sind weitere Umlenkungen des Metallbandes 1 vorgesehen, verkürzt sich der Abstand 18 dementsprechend.

Die beiden Seitenbandabschnitte 7, 8 werden zumeist mit einer annähernd gleichen Breite 19, 20 ausgebildet. In Summe gesehen ergibt sich die Gesamtbreite 2 des Metallbandes 1 durch die Bandbreite 6 des Mittelbandabschnittes 5 sowie den beiden Breiten 19, 20 der Seitenbandabschnitte 7, 8. Je nach gewähltem Verbindungsverfahren zur Ausbildung der Längsverbindungsnähte 9, 10 kann dies zu geringfügigen Abweichungen in der Breite bzw. der Gesamtbreite 2 führen. Bevorzugt werden die einander zugewandten Längsseitenkanten 3, 11 sowie 4, 12 bei einer Verbindung mit einem Schweißvorgang stirnseitig aneinanderstoßend angeordnet und in dieser Stellung miteinander verbunden. Wird als Verbindungsverfahren ein Schweißvorgang gewählt, kann dies beispielsweise durch eine Schutzgasschweißung, eine Laserschweißung, eine Plasmaschweißung oder dergleichen Anwendung erfolgen.

In der Fig. 2 ist eine von vielen Möglichkeiten zur Bildung des Metallbandes 1 aus mehreren nebeneinander angeordneten Bandabschnitten 5, 7, 8 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Bei dieser Ausbildung des Metallbandes 1 kann es sich gegebenenfalls um eine eigenständige Ausführungsform handeln.

Bei der Herstellung des Metallbandes 1 wird zumeist so vorgegangen, dass der dafür vorgesehene Werkstoff in einem Gießvorgang zu einem Metallblock gegossen wird, welcher anschließend in einem Walzvorgang zum entsprechenden Blech umgeformt, insbesondere gewalzt wird. In Abhängigkeit von der für das Blechwalzen zur Verfügung stehenden Breite der Anlage ist auch die maximale Breite des damit herstellbaren Bleches festgelegt bzw. begrenzt. Bei derzeit bekannten und üblichen Walzanlagen für derartige hochwertige Bleche kann eine Blechbreite von ca. 2000 mm hergestellt werden. Werden für gewisse Produktions- bzw. Herstellvorgänge breitere Metallbänder 1 benötigt, ist dieses beispielsweise durch Nebeneinanderanordnung zu verbreitern.

Bei sehr präzise und hochempfindlich herzustellenden Gegenständen, bei welchen das Metallband 1 als Auflage dient, spielt auch die Anordnung und Ausbildung der Längsverbindungsnähte 9, 10 eine wesentliche Rolle. Bei gewissen Anwendungen zur Herstellung von sehr dünnen, folienartigen Gegenständen auf dem Metallband 1, kann das herzustellende, folienartige Bandmaterial seitlich über die Längsverbindungsnähte 9, 10 hin auf die äußeren Längsseitenkanten 16 17 vorragen. Dieses überbreite Folienmaterial wird anschließend an dessen Herstellung, gegebenenfalls unter Zwischenschaltung einiger zusätzlicher Bearbeitungsschritte, im Bereich seiner Längsränder besäumt und beschnitten, wodurch eine Konfektionierung in Richtung von dessen Breite erfolgt. So können dann jene Seitenabschnitte des Folienmaterials entfernt werden, welche beispielsweise während der Herstellung desselben im Bereich der Längsverbindungsnähte 9, 10 abgestützt waren. Damit kann annähernd die volle Bandbreite 6 des Mittelbandabschnittes 5 für die endgültige maximale Breite genutzt werden. Wird Folienmaterial hergestellt, kann dieses z.B. mittels eines gleichmäßigen Gießvorganges oder dergleichen aufgebracht werden, wobei das Basismaterial breiter aufgetragen werden kann als die Bandbreite 6 des Mittelbandabschnittes 5. Dieser seitliche Überstand kann auf den beiden Seitenbandabschnitten 7, 8 abgestützt werden.

Als Folienmaterial kann z.B. ein Polymer-Film als Breitfilm hergestellt werden. Das Basismaterial wird auf die Oberfläche des Metallbandes 1 aufgebracht, insbesondere gegossen und daraus anschließend hochwertige optische Filme oder Folien gebildet. Ein möglicher Werkstoff ist Cellulose Triacetat (CTA) auch als Triacetat oder TAC-Film bekannt, bei dem es sich um einen Kunststoff handelt, der aus Cellulose in einer Reaktion mit Essigsäure gewonnen wird. Dabei wird in einem kontinuierlichen Prozess das CTA Polymer, welches mit einem Lösungsmittel, wie z.B. Dichlormethan versetzt ist, auf die Oberfläche des Metallbandes aufgebracht und danach gemeinsam mit dem Metallband 1 durch einen Trocknungsofen hindurchbewegt. Dabei verdampft das Lösungsmittel und bei Erreichen einer ausreichenden Festigkeit kann der getrocknete Film vom Metallband abgezogen werden. Dieses CTA - Folienmaterial kann unter anderem für die Herstellung von LCD-Bildschirmen verwendet werden. Dabei wird der CTA -Film als beidseitige Schutzfolie auf die Polarisatoren aufgebracht. Dies erfolgt zumeist in einem Laminiervorgang.

Je nach herzustellender Bandlänge wird von einem Blechstreifen zuerst der Mittelbandabschnitt 5 zur Herstellung des Metallbandes 1 abgetrennt, wie dies in der Fig. 2 angedeutet ist. Vom gleichen Blechstreifen des restlichen Bandmaterials wird ein weiterer Längsabschnitt gebildet, welcher bevorzugt in seiner Längserstreckung der Länge des Mittelbandabschnittes 5 entspricht. Je nach gewünschter Breite 19, 20 der Seitenbandabschnitte 7, 8 werden diese in Längsrichtung von dem verbleibenden weiteren Längsabschnitt des Blechstreifen abgetrennt.

Wie bereits zuvor beschrieben, werden die beiden Längsseitenkanten 3, 4 des Mittelbandabschnittes 5 für den nachfolgenden Verbindungsvorgang entsprechend vorbereitet. Diese Vorbereitung der Längsseitenkanten 11, 12 kann ebenfalls an den beiden Seitenbandabschnitten 7, 8 erfolgen.

Der zur Herstellung des Metallbandes 1 zur Verfügung stehende Blechstreifen weist zumeist in seinem rohen Ausgangszustand über seinen Querverlauf zwischen den beiden Längsseitenkanten 3, 4 eine nicht konstante Blechstärke bzw. Wanddicke auf. Bedingt durch den Walzvorgang und die dabei auftretenden Durchbiegungen der Walzen ist der Ausgangsblechstreifen in seinem Mittelbereich geringfügig dicker als in seinen Randbereichen ausgebildet. Um auch im Bereich der auszubildenden Längsverbindungsnähte 9, 10 eine annähernd gleiche Wandstärke der zu verbindenden Seitenbandabschnitte 7, 8 mit dem Mittelbandabschnitt 5 und seinen Längsseitenkanten 3, 4 zur Verfügung zu haben, wird die beim rohen Blechstreifen jeweils außenliegende Längsseitenkante 11, 12 der Seitenbandabschnitte 7, 8 jeweils den Längsseitenkanten 3, 4 des Mittelbandabschnittes 5 zugewendet. Dabei ist in Längserstreckung des rohen Blechstreifens gesehen, die hier rechts angeordnete Längsseitenkante 3 des Mittelbandabschnittes 5 und die Längsseitenkante 11 des ersten Seitenbandabschnittes 7 hintereinander angeordnet. Gleiches gilt aber auch für die links dargestellte Längsseitenkante 4 des Mittelbandabschnittes 5 und die weitere Längsseitenkante 12 des zweiten Seitenbandabschnittes 8. Vor dem Fügen des oder der Seitenbandabschnitte 7, 8 mit dem Mittelbandabschnitt 5 kann die bereits zuvor erwähnte Vorbereitung von deren Längsseitenkanten 3, 4 sowie 11, 12 erfolgen.

Vor dem Fügevorgang zwischen den Seitenbandabschnitten 7, 8 mit dem Mittelbandabschnitt 5 erfolgt zumeist eine Qualitätskontrolle beider Oberflächen von beiden Seitenbandabschnitten 7, 8.

Im Einsatzfall weist das Metallband 1 eine dem herzustellenden bzw. abzustützenden Produkt bzw. Gegenstand eine diesem zugewendete Außenfläche 21 sowie eine davon abgewendete Innenfläche 22 auf, wie dies in der Fig. 1 dargestellt ist.

Bei der in der Fig. 2 dargestellten Draufsicht auf die Blechstreifen bildet beispielsweise die hier dargestellte Ansichtsseite die Außenfläche 21 aus. Bei den abgetrennten und vorbereiteten Seitenbandabschnitten 7, 8 wird dann in Abhängigkeit von der zuvor durchgeführten Prüfung der Oberflächenqualität entschieden, ob die hier dargestellte Oberseite oder Unterseite nach dem Verbinden mit dem Mittelbandabschnitt 5 die Außenfläche 21 des Metallbandes 1 ausbildet. Damit kann jene Oberfläche des Seitenbandabschnittes 7, 8 gewählt werden, welche qualitativ höherwertiger ist.

Für den Bindungsvorgang zwischen den Längsseitenkanten 3, 11 sowie 4, 12 wird zumeist ein Schweißprozess eingesetzt. Bevorzugt erfolgt die Schweißung derart, dass der Mittelbandabschnitt 5 und zumindest einer der Seitenbandabschnitte 7, 8 einer nicht näher dargestellten Schweißvorrichtung zugeführt werden. Zur Durchführung des Schweißvorganges ist die Schweißvorrichtung zumeist ortsfest angeordnet. Es werden dabei die zu verbindenden Bandabschnitte 5, 7, 8 entsprechend geführt an der Schweißvorrichtung vorbeibewegt und dabei die Längsverbindungsnaht 9 und/oder 10 ausgebildet. So kann die Schweißrichtung der Längsverbindungsnähte 9, 10 in Richtung der Längsverbindungsnähte 9, 10 gesehen, entweder zueinander gleich oder entgegengesetzt zueinander gewählt werden.

In der Fig. 3 ist eine mögliche und gegebenenfalls für sich eigenständige Ausbildung der Längsverbindungsnaht 9 zwischen dem Mittelbandabschnitt 5 und dem ersten Seitenbandabschnitt 7 im Querschnitt und in vergrößerter Darstellung gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Bei diesem hier gezeigten Ausführungsbeispiel weist der Mittelbandabschnitt 5 im Bereich seiner Längsseitenkante 3 eine Wandstärke 23 auf, welche größer ist als eine Wandstärke 24 des ersten Seitenbandabschnittes 7 im Bereich seiner Längsseitenkante 11. Dabei ist zu ersehen, dass die die Innenfläche 22 bildenden Oberflächen des Mittelbandabschnittes 5 sowie des ersten Seitenbandabschnittes 7 zueinander flächig bzw. fluchtend ausgerichtet sind. Hier wird unter flächig verstanden, dass zwischen den beiden Oberflächen des Mittelbandabschnittes 5 und des ersten Seitenbandabschnittes 7 kein Versatz in Richtung der Wandstärke 23, 24 erfolgt und somit eine ebenflächige relative Anordnung zueinander ausgebildet ist.

Durch die zuvor beschriebenen Unterschiede in der Wandstärke 23, 24 überragt die hier oben angeordnete Oberfläche bzw. Außenseite 21 des Mittelbandabschnittes 5 die unmittelbar daneben angeordnete Oberseite bzw. Oberfläche des ersten Seitenbandabschnittes 7.

Wird ein Schweißvorgang zur Verbindung der beiden Längsseitenkanten 3, 11 bzw. 4, 12 eingesetzt, sind die jeweils einander zugewendeten Längsseitenkanten 3, 11 bzw. 4, 12 entsprechend mit einer Schweißnahtvorbereitung aufzubereiten. Um den Schweißspalt auf ein Ausmaß bis hin zu einem Aneinanderliegen zu reduzieren, sind die Längsseitenkanten 3, 4 sowie 11, 12 mit einer ausreichenden Geradheit in Richtung ihrer Längserstreckung mit möglichst geringen Toleranzabweichungen auszubilden. Damit wird eine hohe Qualität der Längsverbindungsnähte 9, 10 sichergestellt. Ist die Ausbildung der Längsverbindungsnähte 9, 10 erfolgt, kann gegebenenfalls in diesem Zustand bereits eine Bearbeitung der Längsverbindungsnaht 9, 10 im Bereich der die Innenfläche 22 bildenden Seite des Metallbandes 1 erfolgen. Für diesen Vorgang wäre es möglich, das Metallband 1 umfassend den Mittelbandabschnitt 5 sowie die Seitenbandabschnitte 7, 8 an den einander zugewendeten Stirnenden 13, 14 zu einem endlos umlaufenden Band zu verbinden. Dabei kann die später die Innenfläche 22 bildende Oberfläche für diesen Bearbeitungsvorgang die Außenseite bilden. Um eine möglichst ebenflächige Innenfläche 22 auszubilden, wird je nach gewünschter Oberflächenqualität ein entsprechender Schleifvorgang und/oder Poliervorgang eingesetzt.

Ist die Innenfläche 22 soweit ebenflächig ausgebildet, kann die Querverbindungsnaht 15 aufgetrennt und somit die einander zugewendeten Stirnenden 13, 14 voneinander gelöst werden. Anschließend daran kann das Metallband 1 gewendet werden, wobei dann die zuvor die Außenseite bildende Innenfläche 22 nun im Bereich der Innenseite des Metallbandes 1 angeordnet ist. Für den weiteren Bearbeitungsvorgang erfolgt zumeist ein neuerliches Verbinden der Stirnenden 13, 14 durch Herstellen einer neuen Querverbindungsnaht 15. Anschließend daran wird das gesamte Metallband 1 im Bereich der nun die Außenfläche 21 bildenden Oberfläche durch einen entsprechenden Bearbeitungsvorgang hin bis zur gewünschten Oberflächenqualität geschliffen und/oder poliert. Durch diesen gewählten, umlaufenden Bearbeitungsvorgang des Metallbandes 1 kann so eine hochqualitative Ausbildung des Metallbandes 1 erzielt werden. Im Zuge dieses Bearbeitungsvorganges können dann auch noch die das Metallband 1 begrenzenden Längsseitenkanten 16, 17 bearbeitet werden, sodass das Metallband 1 über dessen gesamte Längserstreckung nicht nur eine gleiche Gesamtbreite 2 aufweist, welche mit geringsten Toleranzen ausgeführt werden kann, sondern auch ein exakter Parallellauf zwischen den voneinander in Querrichtung voneinander distanzierten Längsseitenkanten 16, 17 erzielbar ist.

Wie bereits zuvor beschrieben, erfolgt die Ausbildung der Längsverbindungsnähte 9, 10 bevorzugt durch einen Schweißprozess. Um eine möglichst kompakte Nahtausbildung zu erzielen, werden die miteinander zu verbindenden Längsseitenkanten 3, 4 des Mittelbandabschnittes 6 unmittelbar benachbart bzw. stirnseitig aneinanderstoßend zu den Längsseitenkanten 11, 12 der Seitenbandabschnitte 7, 8 angeordnet. Bei der Durchführung des Schweißvorganges kann dieser entweder nur einseitig im Bereich der Außenfläche 21 oder im Bereich der Innenfläche 22 erfolgen. Es wäre aber auch möglich, beidseitig der auszubildenden Schweißnaht jeweils eine Schweißvorrichtung anzuordnen und gleichzeitig ausgehend von der Außenfläche 21 sowie der Innenfläche 22 den Schweißvorgang durchzuführen.

Um im Bereich der Außenfläche 21 eine möglichst geringe Breite der Schweißnaht zu erhalten, kann der Schweißvorgang ausgehend von der Innenfläche 22 hin zur Außenfläche 21 erfolgen, wobei dann die Wurzel der Schweißnaht dem Bereich der Außenfläche 21 des Metallbandes 1 zugewendet ist. diese Ausbildung der Schweißnaht ist vereinfacht in der Fig. 3 angedeutet.

Um eine besonders hohe Reinheit und Güte der Schweißverbindung unter Ausbildung einer Schweißnaht zu erzielen, ist es möglich, den Schweißvorgang in einem abgeschlossenen Raum mit definierten Umgebungsbedingungen durchzuführen. Dabei kann auch von sogenannten Reinraumbedingungen gesprochen werden. So kann beispielsweise vor der Zuführung der Umgebungsluft diese gefiltert und/oder gereinigt werden, anschließend daran gegebenenfalls auf eine vorbestimmte Temperatur erwärmt und/oder gekühlt werden und nachfolgend in diesem aufbereiteten Zustand dem abgeschlossenen Raum zur Durchführung des Schweißvorganges durchgeführt werden. Dies kann beispielsweise mittels einer von oben nach unten fallenden Strömung erfolgen, wobei die Zuführung z.B. im Deckenbereich des abgeschlossenen Raumes angeordnet ist. Bei der Aufbereitung der Umgebungsluft kann dieser auch noch zumindest ein zusätzlicher, gasförmiger Stoff beigemengt werden, welcher die Schweißbedingungen verbessert und so zu einer höheren Schweißnahtgüte führt.

Die dem abgeschlossenen Raum zugeführte Luft bzw. das gasförmige Medium kann im Bodenbereich nach dem Durchströmen des Innenraums abgeführt, insbesondere abgesaugt, werden, wobei hier auch ein geschlossener Kreislauf hin zur Versorgungseinheit möglich ist. Nach einem entsprechenden Reinigungs- und/oder Filterungsvorgang kann gegebenenfalls Primärluft zugesetzt werden und dieses neue gasförmige Gemisch kann gegebenenfalls unter weiterer Reinigung und/oder Aufbereitung wieder dem abgeschlossenen Raum zugeführt werden.

Das Metallband 1, insbesondere wenn dieses aus dem Mittelbandabschnitt 5 sowie zumindest einem der Seitenbandabschnitte 7, 8 gebildet ist, soll derart zusammengesetzt werden, dass der Werkstoff zur Bildung des Mittelbandabschnittes 5 sowie der Seitenbandabschnitte 7, 8 stets aus der gleichen Charge gewählt ist. Dies bedeutet, dass die Werkstoffqualität über den gesamten Querschnitt der Breite sowie über die Längserstreckung des Metallbandes 1 stets exakt gleich ist. So wird das Metallband 1 aus dem zueinander identischen Werkstoff eines gemeinsamen Vorproduktes gebildet. Bei der Herstellung des Vormaterials können wie bei jedem Herstellprozess zwar Qualitäten in den vorgegebenen Toleranzen der Zusammensetzung geschaffen werden, wobei dies jedoch zwischen unterschiedlichen Herstellvorgängen in diesen Grenzen differieren kann. Deshalb ist es besonders wichtig, dass im Hinblick auf den späteren Einsatz des Metallbandes 1 dieses nicht nur aus der gleichen Materialqualität sondern auch aus dem einen und demselben Vormaterial gebildet ist, welches zu einem gemeinsamen Blechstreifen mit vordefinierter Länge, Breite sowie Stärke umgeformt worden ist.

Zur Erzielung einer hohen Oberflächenqualität sowie eine allgemeine durchgängige Qualität des Metallbandes 1 zu erreichen, wird bereits ausgehend von der Herstellung der Schmelze, dem anschließenden Vergießen zu Rohblöcken und dem anschließenden Umformen und Bandwalzen eine hohe Sorgfalt aufgewendet, um den strengen Qualitätsanforderungen gerecht zu werden. Der auf einer Rolle aufgewickelte Blechstreifen zur Bildung des Metallbandes 1 wird als sogenanntes Vormaterial bezeichnet. Je nach Länge des herzustellenden Metallbandes 1 wird dieses gegebenenfalls mit einer ausreichenden Überlänge von der Rolle des Vormaterials abgespult und abgetrennt. Anschließend daran erfolgt ein erster Richtvorgang zur Herstellung eines planen Bandes bzw. Streifens in Bezug auf Querwölbung und Handdifferenz. Anschließend daran erfolgt eine Inspektion auf mögliche Oberflächenfehler, um jene Seite bzw. Fläche auszuwählen, welche später die Außenfläche 21 des Metallbandes 1 ausbilden soll. Anschließend daran wird der Blechstreifen bzw. das Band auf die benötigte Breite gesäumt, was beispielsweise durch einen Schabvorgang oder ähnliches erfolgen kann. Dann erfolgt die Vorbereitung der Längsseitenkanten 3, 4 des Mittelbandabschnittes 5, welche später die Schweißkanten bilden. Diese Längsseitenkanten 3, 4 können dabei gebürstet und/oder geschabt und/oder geschliffen werden, um Verunreinigungen bzw. Anlagerungen, wie Oxydschichten oder dergleichen, zu entfernen.

Anschließend daran wird der bzw. werden die an den Mittelbandabschnitt 5 anzubringenden Seitenbandabschnitte 7, 8 ebenfalls plangerichtet, falls dies nicht bereits zuvor gemeinsam mit dem gesamten Blechstreifen erfolgt ist. Dann wird eine Inspektion auf Oberflächenfehler durchgeführt, um wiederum festlegen zu können, welche Oberfläche bzw. Seite des Seitenbandabschnittes 7, 8 später die Außenfläche 21 des Metallbandes 1 bilden soll. Dann werden die Seitenbandabschnitte 7, 8 auf deren benötigte Breite gesäumt, wie dies bereits zuvor für den Mittelbandabschnitt 5 beschrieben worden ist. Dann werden jene Längsseitenkanten 11, 12, welche mit den Längsseitenkanten 3, 4 des Mittelbandabschnittes 5 verbunden werden, einer Schweißnahtvorbereitung unterzogen. Vor Durchführung des Schweißvorganges werden die dafür vorgesehenen Längsseitenkanten 11, 12 von möglichen Verunreinigungen bzw. Anlagerungen gereinigt, wobei dies durch bürsten, schaben oder dergleichen erfolgen kann.

Ist diese Vorbereitung soweit durchgeführt, erfolgt der Verbindungsvorgang des Mittelbandabschnittes 5 mit dem oder den Seitenbandabschnitten 7, 8. Anschließend daran werden mögliche Schweißnahtüberhöhungen abgetragen, wobei dies beispielsweise durch einen Schleifprozess erfolgen kann. Gegebenenfalls wird ein Richtvorgang des gesamten Metallbandes 1 erfolgen, falls dies notwendig sein sollte. Je nach Anforderung der Oberflächenqualität wird dann das Metallband 1 außen und/oder innen geschliffen, wobei nachfolgend ein Nachrichtvorgang erfolgen kann. Anschließend an diesen erfolgt ein weiterer Schleifvorgang zur Ausbildung einer feineren Oberflächenqualität. Dies kann als Feinschleifvorgang bezeichnet werden.

Sind diese Bearbeitungsvorgänge abgeschlossen, kann das Metallband 1 zu einem endlos umlaufenden Band im Bereich seiner Stirnenden 13, 14 durch die Querverbindungsnaht 15 verbunden werden. Dies kann durch einen Schweißvorgang, insbesondere mit einer Schutzgasschweißung, einer Laserschweißung oder dergleichen erfolgen. Anschließend daran wird ein möglich auftretender Schweißnahtüberstand der Querverbindungsnaht 15 im Bereich der Außenfläche 21 und/oder Innenfläche 22 verschliffen. In diesem endlosen Zustand des Metallbandes 1 erfolgt der endgültige Schleifvorgang, wodurch das Band in Bezug auf seine Wandstärke bzw. Dicke mit hoher Präzision hergestellt wird. Darüber hinaus kann aber auch seine Breite über die gesamte Längserstreckung präzise hergestellt werden. Zwischenzeitlich können Zwischenkontrollen bzw. Zwischenprüfungen durchgeführt werden. Je nach geforderter Oberflächenqualität erfolgt ein Poliervorgang des Metallbandes 1 zumindest im Bereich seiner Außenfläche 21, wobei dies je nach Qualitätsanforderungen auch an der Innenfläche 22 erfolgen kann. Nachfolgend wird eine Zwischeninspektion des Metallbandes 1 durchgeführt, wobei es möglich ist, aufgefundene Fehler durch Reparatur zu beheben.

Nachfolgend kann ein weiterer Vorpoliervorgang erfolgen bzw. dieser fortgesetzt werden. Nach Abschluss desselben kann ein weiterer Poliervorgang zur Herstellung der endgültigen Oberflächenqualität durchgeführt werden. Ist dieser Vorgang abgeschlossen, wird eine interne Qualitätsprüfung und Inspektion durchgeführt,, wobei anschließend zumeist eine eigene Kundenabnahme zur endgültigen Übernahme erfolgt.

Der Vorpoliervorgang des Metallbandes 1 kann beispielsweise mit einem Schleifstein erfolgen. Gegebenenfalls können dabei noch Zusatz-Hilfsstoffe Anwendung finden. Der Fertigpoliervorgang kann seinerseits mit einem Baumwolltuch erfolgen.

Je nach Einsatzzweck des Metallbandes 1 können diese beispielsweise aus den unterschiedlichsten Edelstahlmaterialien, Kohlenstoffstählen oder Titan und dies in unterschiedlichen Qualitäten gebildet sein. Die Metallbänder können als Prozess- oder Transportbänder Anwendung finden.

Nachfolgend angeführte Beispiele beziehen sich auf die Normbezeichnungen gemäß EN 10027 Blatt 1 und Blatt 2. Als Beispiele seien hier die Werkstoffe X10CrNi18-8 mit der Werkstoff-Nummer 1.4310, X5CrNi18-10 mit der Werkstoff-Nummer 1.4301, X5CrNiMo17-12-2 mit der Werkstoff -Nummer 1.4401, X3CrNiMo13-4 mit der Werkstoff-Nummer 1.4313, CrNiCuTi15-7 oder ähnliche Werkstoffe, Ck67 mit der Werkstoff-Nummer 1.1231,und Ti-II mit der Werkstoff-Nummer 3.7035, XINiCrMoCu25-20-5. Der Werkstoff Ck 67 wird auch mit einer geschützten Werksbezeichnung "Ti 994-Ti-grade2" bezeichnet.

Bei den nachfolgend im Detail beschriebenen Werkstoffen werden diese mit den einzelnen Legierungselementen zum jeweiligen Werkstoff ausgebildet. Die Angaben erfolgen in Tabelle 1 dabei in Gewichts-Prozent, sofern keine andere Einheit angegeben ist.

Tabelle 1:

|  | XSCrNi18-10 (1.4301) | | X5CrNiMo17-12-2 (1.4401) | |
| --- | --- | --- | --- | --- |
|  | Sollmenge | Idealmenge | Sollmenge | Idealmenge |
| C (Kohlenstoff | 0,040 - 0,060 |  | 0,040 - 0,060 |  |
| Cr (Chrom) | 18,3 - 18,7 |  | 17,0 - 17,4 |  |
| Ni (Nickel) | 10,1 - 10,5 |  | 10,5 - 10,9 |  |
| Mo (Molybdän) | max. 0,35 |  | 2,0 - 2,2 |  |
| Mn (Mangan) | 1,2 - 1,8 |  | 1,1 - 1,8 |  |
| Si (Silizium) | 0,3 - 0,6 |  | 0,3 - 0,6 |  |
| Cu (Kupfer) | max. 0,25 |  | max. 0,25 |  |
| P (Phosphor) | max. 0,025 |  | max. 0,025 |  |

(fortgesetzt)

| | XSCrNi18-10 (1.4301) | | X5CrNiMo17-12-2 (1.4401) | |
|---|---|---|---|---|
| | Sollmenge | Idealmenge | Sollmenge | Idealmenge |
| S (Schwefel) | max. 0,005 | | max. 0,001 | |
| Al (Aluminium) | max. 0,01 | max. 0,005 | max. 0,01 | max. 0,005 |
| N (Stickstoff) | max. 0,02 | | max. 0,02 | |
| O (Sauerstoff) | max. 0,002 | | max. 0,003 | |
| V (Vanadium) | max. 0,07 | | max. 0,07 | |
| Pb (Blei) | max. 0,002 | | max. 0,002 | |
| Sn (Zinn) | max. 0,01 | | max. 0,01 | |
| Nb (Niob) | max. 0,01 | | max. 0,01 | |
| B (Bor) | max. 0,001 | | max. 0,001 | |
| Ta (Tantal) | max. 0,005 | | max. 0,005 | |
| Ti (Titan) | max. 0,01 | | max. 0,01 | |

Bei den zuvor erwähnten unterschiedlichen Werkstoffen ist auch auf den Gefügeaufbau Bedacht zu nehmen. Bei der Korngröße, insbesondere bei der Korngrößennummer (Korngrößenkennzahl) nach der Norm ASTM E 112-84 soll der Kennwert "G" $\geq$ (größer / gleich) 9,0 sein. Die Korngrößennummer (Korngrößenkennzahl) ist dabei nach der "Lineal Intercept Procedure" gemäß Punkt 11.6, 11.6.1 und 11.6.2 der Norm unter Einhaltung aller anderen relevanten Vorschriften mit einer Genauigkeit von mindestens ½ ASTM-Nummer zu bestimmen. Der Gefügezustand ist vollaustenitisch ohne Deltaferrit im kaltgewalzten Ausgangsmaterial des Metallbandes 1. Umformmartensit ist in nur so geringem Ausmaß zulässig, dass beim Kaltwalzen auf Festigkeitsstufe 1 gemäß nachfolgender Tabelle 2 die zulässige magnetische Permeabilität nicht überschritten wird. Die nachfolgend auf Hochglanz polierte Oberfläche darf keine orangenhautähnlich Struktur oder Zeilenstruktur aufweisen.

Die magnetische Permeabilität des auf die in Tabelle 2 angegebenen Festigkeitsstufen gewalzten Bandes wird nach ASTM A-342 gemessen. So gilt z.B. für den Werkstoff X5CrNi18-10 (1.4301), Festigkeitsstufe 1:

Relative Permeabilität $\mu_r \leq 1,15$ bei einer Erregung von 200 Oersted (Oe).

Dieser in Oersted (Oe) angegebene Wert kann mit folgender Formel in einer SI-Einheit in A/m (Ampere / m) ausgedrückt werden.

$$1 \, Oe = 1000 \, / \, (4 * \pi)$$

Tabelle 2:

| X5CrNi18-10 (1.4301) | Festigkeitsstufe 1 | Festigkeitsstufe 2 |
|---|---|---|
| Zugfestigkeit (N/mm$^2$) Idealwert | 930 - 1100 980 | 1030 - 1230 1130 |
| Streckgrenze 0,2 (N/mm$^2$) min | 810 | 896 |
| Bruchdehnung 50 (%) min. | 12 | 8 |
| Härte HRc / HV 10 min. | 28/284 | 32/315 |

Wie bereits zuvor erwähnt, werden die einzelnen Bleche ausgehend von ihrem Zustand als Vormaterial bis hin zum fertigen Metallband 1 unterschiedlichen und gegebenenfalls mehrfachen Qualitätsprüfungen unterzogen. Eine der vielen Prüfungen ist die "Metallografische Prüfung des Gehaltes nichtmetallischer Einschlüsse in Stählen mit Bildreihen", welche basierend auf der Norm DIN EN10247 - Ausgabe Juli 2007 durchgeführt wird. In Abwandlung zu dieser Norm erfolgt eine noch feinere Prüfung bzw. Prüfdurchführung, welche sich davon in den nachfolgend aufgeführten Punkten unterscheidet.

Gemäß dem Punkt 4.1.4 sowie 6.3 betreffend die Messfläche sieht die Norm vor, dass die Messfläche eine Größe von mindestens 200 mm² aufweisen soll. Im Gegensatz dazu wird die Messfläche auf ein Ausmaß von 625 mm² vergrößert, wobei aufgrund der hohen Reinheit der verwendeten Werkstoffe bei diesem Flächenausmaß eine vollständige Abrasterung erfolgt und dabei die ermittelten Einschlüsse vollständig ausgezählt werden. Dieses Flächenausmaß von 625 mm² kann beispielsweise durch ein Quadrat mit einer Seitenlänge von 25 mm erreicht werden. Die jeweilige Messfläche bzw. die Messflächen werden dabei immer parallel zur Walzfläche bzw. Blechoberfläche ausgerichtet, wobei auch Mehrfachanordnungen der Messflächen verteilt über die gesamte Oberfläche des Bandes Anwendungen finden. Die zu prüfenden Bleche weisen dabei eine Wandstärke zwischen 1,0 und 3,0 mm, bevorzugt zwischen 1,5 mm und 2,0 mm auf.

Da das gesamte Metallband 1 bzw. die das Metallband 1 bildenden Bandabschnitte 5, 7, 8 jeweils für sich zusammengehörige Bauteile bilden, sind die einzelnen Messflächen verteilt auf deren Oberfläche anzuordnen. Bei der Auswertung ist eine Vergrößerung von 200fach zu wählen, wobei diese während dem Auswertevorgang nicht gewechselt werden darf. Dies ist in der Norm EN 10247 beim Punkt 7.1 "Vergrößerung" definiert. Die Auswertung und vollständige Abrasterung der zuvor beschriebenen Messfläche erfolgt unabhängig vom Vergrößerungsfaktor. Durch die hohen Qualitätsanforderungen werden alle aufgefundenen Einschlüsse je Messfeld in unterschiedliche Größenklassen eingeteilt. Dabei werden folgende Klasseneinteilungen gewählt: 2 $\mu$m bis kleiner als 5 $\mu$m, 5 $\mu$m bis kleiner als 10 $\mu$m, 10 $\mu$m bis kleiner als 15 $\mu$m, 15 $\mu$m bis kleiner als 20 $\mu$m, 20 $\mu$m bis kleiner als 25 $\mu$m. Nachfolgend ist ein Beispiel für eine Auszählung von Einschlüssen an einer Blechtafel wiedergegeben, wobei die Messfläche ein Ausmaß von 625 mm² aufweist und als Werkstoff das Material X5CrNi18-10 (1.4301) zur Bildung des Metallbandes 1 eingesetzt ist.

| | Anzahl Einschlüsse pro Einschluss-Größenklasse | | | | |
|---|---|---|---|---|---|
| Messstelle | 2 - <5 $\mu$m | 5 - <10 $\mu$m | 10 - <15 $\mu$m | 15 - <20 $\mu$m | 20 - <25 $\mu$m |
| 1 | 1.9 | 2 | 2 | 0 | 0 |
| 2 | 22 | 3 | 3 | 0 | 1 |
| 3 | 20 | 4 | 0 | 1 | 0 |
| 4 | 19 | 1 | 0 | 0 | 1 |
| 5 | 18 | 2 | 1 | 0 | 0 |
| 6 | 17 | 2 | 0 | 0 | 0 |

Aufgrund dieser Übersicht ist zu ersehen, dass lediglich eine größere Anzahl von Einschlüssen in der ersten Größenklasse zwischen 2 $\mu$m und kleiner als 5 $\mu$m ermittelt worden sind.

Eine Anzahl an Einschlüssen in dieser ersten Größenklasse zwischen 2 $\mu$m bis kleiner als 5 $\mu$m liegt dabei in einer unteren Grenze von keinem Einschluss bis zu 15 Einschlüssen und einer oberen Grenze von 25 Einschlüssen. Bei der zweiten, nächsten Größenklasse zwischen 5 $\mu$m und kleiner als 10 $\mu$m liegt die Anzahl der nicht metallischen Einschlüsse wesentlich geringer, wobei hier die untere Grenze bei keinem Einschluss und die obere Grenze bei 6 Einschlüssen liegt. In der dritten Größenklasse zwischen 10 $\mu$m und kleiner als 15 $\mu$m liegt die Anzahl der Einschlüsse in einer unteren Grenze von keinem Einschluss und einer oberen Grenze von 4 Einschlüssen. Bei der weiteren vierten Größenklasse zwischen 15 $\mu$m und kleiner als 20 $\mu$m sowie der weiteren fünften Größenklasse zwischen 20 $\mu$m und kleiner als 25 $\mu$m liegt jeweils die untere Grenze bei keinem Einschluss und die obere Grenze bei 3 Einschlüssen.

Aus den ermittelten Einschlussanzahlen der jeweiligen unterschiedlichen Messstellen 1 bis 6 ergeben sich je Größenklasse unterschiedliche Mittelwerte bzw. Durchschnittswerte, welche in der ersten Größenklasse zwischen 2 $\mu$m und kleiner als 5 $\mu$m bei 19,16 Einschlüssen, bei der zweiten Größenklasse (5 $\mu$m bis kleiner als 10 $\mu$m) bei 2,33 Einschlüssen, bei der dritten Größenklasse (10 $\mu$m bis kleiner als 15 $\mu$m) bei einem Einschluss bei der vierten Größenklasse (15 $\mu$m bis kleiner als 20 $\mu$m) bei 0,16 Einschlüssen und schließlich bei der fünften Größenklasse (20 $\mu$m bis kleiner als 25 $\mu$m) bei 0,33 Einschlüssen liegen.

Da bei vielen Anwendungen derartigen Metallbänder 1 auch eine sehr hohe Oberflächengüte gefordert ist, muss der Werkstoff zum Aufbringen einer strukturlosen Spiegelpolitur mit einer Rauhtiefe Ra (arithmetischer Mittenrauwert) oder Rz (Gemittelte Rauhtiefe ) Ra $\leq 0,02\mu$m; Rz $\leq 0,1 \mu$m geeignet sein. Dies nicht nur im Bereich der Oberflächen des Metallbandes 1 sondern auch im Bereich von Verbindungsstellen zwischen den einzelnen Bandabschnitten 5, 7, 8. Davon sind die Längsverbindungsnähte 10, 11 betroffen. Das Flächenausmaß bei größeren Bändern kann dabei auch mehrere 100 m² betragen.

Voraussetzung dazu ist ein sehr hoher Reinheitsgrad des Vormaterials (niedriger Phosphor-Schwefel- und Aluminiumgehalt), ein sehr dichtes Material ohne Poren sowie das Fehlen harter Phasen, wie diese durch Stabilisierungselemente oder härtesteigernde Elemente verursacht werden können (z.B. Titan, Kobalt, Tantal, Stickstoff).

Ein weiteres Qualitätskriterium kann auch die endgültige Dicke bzw. Stärke des Metallbandes 1 sein. Dazu ist eine Vielzahl von Messungen notwendig, um hier ein über die gesamte Bandoberfläche aussagekräftiges Messergebnis zu erhalten. Dabei wird für diese Messung ein vorgegebener Abstand in Querrichtung der Längserstreckung des Metallbandes 1 von dessen Längsseitenkanten 16, 17 eingehalten. Dieser Abstand kann z.B. zwischen 5 mm und 15 mm betragen. In Längserstreckung des Metallbandes 1 werden ebenfalls mehrere Messungen durchgeführt. Damit wird ein Gitternetz von über die Oberfläche verteilten Messpunkten erzielt.

Wird die Gesamtbreite 2 des Metallbandes in cm angegeben, ist zumindest die Hälfte des Wertes der Gesamtbreite 2 in cm als Anzahl der Messpunkte in Querrichtung, insbesondere in senkrechter Richtung bezüglich der Längsseitenkanten 16, 17, zu wählen. Beträgt beispielsweise die Gesamtbreite 200 cm, ist die Dicke bei einer Anzahl von mindestens 100 Messpunkten in Querrichtung zu messen. Je breiter das Metallband ist, desto höher kann die Anzahl der Messpunkte quer zur Längserstreckung gewählt werden. Diese Anzahl der Messpunkte kann dabei auch der Gesamtbreite 2 in cm oder aber auch noch größer entsprechen.

Dabei wird bevorzugt eine Querdistanz zwischen den einzelnen Messpunkten gleich zueinander gewählt und somit werden die Messpunkte gleichmäßig über die Messbreite aufgeteilt.

So sollen die Abweichungen von der Durchschnittsdicke des Metallbandes 1 in einem Randbereich des Metallbandes 1 beispielsweise zwischen $\pm$ 5 % und in einem Mittelbereich des Metallbandes 1 zwischen $\pm$ 5 % betragen. Damit wird eine hohe Genauigkeit auch in Bezug auf Welligkeit sowie Ebenheit des Metallbandes 1 erzielt.

Wie bereits einleitend erwähnt, sind für die Folienherstellung sehr hohe Anforderungen an die Oberflächengüte sowie Reinheit des Werkstoffes des Metallbandes 1 zu stellen. Aufgrund der geringen Einschlüsse im Werkstoff führt dies zu einer nahezu durchgängigen, einheitlichen Oberflächenqualität, wodurch auch das darauf hergestellte Folienmaterial eine ebenso hohe Güte aufweist.

Abschließend sei erwähnt, dass das Metallband 1 auch nur den Mittelbandabschnitt 5 umfassen kann, wenn die damit erzielbare Breite des herzustellenden Bauteils für die nachfolgende Anwendung ausreichend ist.

Der Ordnung halber sei abschließend darauf hingewiesen, dass zum besseren Verständnis des Aufbaus des Metallbandes 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

**Bezugszeichenaufstellung**

| | |
|---|---|
| 1 | Metallband |
| 2 | Gesamtbreite |
| 3 | Längsseitenkante |
| 4 | Längsseitenkante |
| 5 | Mittelbandabschnitt |
| 6 | Bandbreite |
| 7 | erster Seitenbandabschnitt |
| 8 | zweiter Seitenbandabschnitt |
| 9 | Längsverbindungsnaht |
| 10 | Längsverbindungsnaht |
| 11 | Längsverbindungskante |
| 12 | Längsverbindungskante |
| 13 | Stirnende |
| 14 | Stirnende |
| 15 | Querverbindungsnaht |
| 16 | Längsseitenkante |
| 17 | Längsseitenkante |

18 Abstand
19 Breite
20 Breite

21 Außenfläche
22 Innenfläche
23 Wandstärke
24 Wandstärke

**Patentansprüche**

1. Metallband (1), umfassend eine Außenfläche (21) sowie eine Innenfläche (22), auf welcher oder auf welchen mehrere Messflächen von je 625 mm² je 0 bis 25 nichtmetallische Einschlüsse zwischen 2 μm und kleiner als 5 μm, 0 bis 6 nichtmetallische Einschlüsse zwischen 5 μm und kleiner als 10 μm und 0 bis 4 nichtmetallische Einschlüsse zwischen 10 μm und kleiner als 15 μm aufweisen, **dadurch gekennzeichnet, dass** der metallische Werkstoff ausgewählt ist aus der Gruppe von X10CrNi18-8, X5CrNi18-10, X5CrNiMo17-12-2, X3CrNiMo13-4, CrNiCuTi15-7, Ck 67, Ti-II, X1NiCrMoCu25-20-5.

2. Metallband (1) nach Anspruch 1, **gekennzeichnet durch** 0 bis 3 Einschlüsse zwischen 15 μm und kleiner als 20 μm je Messfläche.

3. Metallband (1) nach Anspruch 1 oder 2, **gekennzeichnet durch** 0 bis 3 Einschlüsse zwischen 20 μm und kleiner als 25 μm je Messfläche.

4. Metallband (1) nach einem der vorhergehenden Ansprüche, **dadurch gekennzeichnet, dass** dieses in Längserstreckung gesehen mehrere nebeneinander angeordnete sowie miteinander verbundene Bandabschnitte (5, 7, 8) umfasst.

5. Metallband (1) nach Anspruch 4, **dadurch gekennzeichnet, dass** an beiden Längsseitenkanten (3,4) des Mittelbandabschnittes (5) jeweils ein Seitenbandabschnitt (7, 8) angeordnet ist.

6. Metallband (1) nach einem der Ansprüche 4 bis 5, **dadurch gekennzeichnet, dass** die Breite (19, 20) des Seitenbandabschnitts (7, 8) bis zu 150 % der Bandbreite (6) des Mittelbandabschnittes (5) beträgt.

7. Metallband (1) nach einem der Ansprüche 4 bis 6, **dadurch gekennzeichnet, dass** die einzelnen Bandabschnitte (5,7,8) aus demselben Werkstoff eines gemeinsamen Vorproduktes gebildet sind.

8. Metallband (1) nach einem der vorhergehenden Ansprüche, **dadurch gekennzeichnet, dass** zumindest die Außenfläche (21) eine strukturlose Spiegelpolitur mit einer Rauhtiefe Ra ≤ 0,02 μm oder Rz ≤ 0,1 μm aufweist.

9. Metallband (1) nach einem der vorhergehenden Ansprüche, **dadurch gekennzeichnet, dass** dieses endlos umlaufend ausgebildet ist.

10. Verwendung eines Metallbands (1) nach einem der Ansprüche 1 bis 9 als Trägerband beziehungsweise Prozessband für den Abguss von Folienmaterial.

11. Verfahren zur Herstellung eines Metallbands (1) nach einem der Ansprüche 1 bis 9, **dadurch gekennzeichnet, dass** aus einem Blechstreifen ein Mittelbandabschnitt (5) und zumindest ein in Längsrichtung des Blechstreifens hinter dem Mittelbandabschnitt (5) angeordneter Seitenbandabschnitt (7, 8) herausgetrennt und anschließend eine Längsverbindungskante (11, 12) des Seitenbandabschnitts (7, 8) mit einer Längsseitenkante (3, 4) des Mittelbandabschnittes (5) verbunden werden.

**Claims**

1. A metal strip (1) comprising an outer surface (21) as well as an inner surface (22), wherein a plurality of measuring fields each of 625 mm² on either or both thereof each comprises 0 to 25 non-metallic inclusions of between 2 μm

and less than 5 $\mu$m, 0 to 6 non-metallic inclusions of between 5 $\mu$m and less than 10 $\mu$m and 0 to 4 non-metallic inclusions of between 10 $\mu$m and less than 15 $\mu$m, **characterized in that** the metallic material is selected from the group formed by X10CrNi18-8, X5CrNi18-10, X5CrNiMo17-12-2, X3CrNiMo13-4, CrNiCuTi15-7, Ck 67, Ti-II, and X1NiCrMoCu25-20-5.

2. The metal strip (1) according to claim 1, **characterized by** 0 to 3 inclusions between 15 $\mu$m and less than 20 $\mu$m per measuring field.

3. The metal strip (1) according to claim 1 or 2, **characterized by** 0 to 3 inclusions between 20 $\mu$m and less than 25 $\mu$m per measuring field.

4. The metal strip (1) according to any one of the preceding claims, **characterized in that**, viewed in the longitudinal direction, it comprises a plurality of adjacent and interconnected strip sections (5, 7, 8).

5. The metal strip (1) according to claim 4, **characterized in that** a lateral strip section (7, 8) is disposed on both longitudinal lateral edges (3, 4) of the central strip section (5).

6. The metal strip (1) according to claim 4 to 5, **characterized in that** the width (19, 20) of the lateral strip section (7, 8) is up to 150 % of the strip width (6) of the central strip section (5).

7. The metal strip (1) according to any one of claims 4 to 6, **characterized in that** the individual strip sections (5, 7, 8) are formed from the same material of a common input stock.

8. The metal strip (1) according to any one of the preceding claims, **characterized in that** at least the outer surface (21) is provided with a non-textured mirror finish with a surface roughness Ra $\leq$ 0.02 $\mu$m or Rz $\leq$ 0.1 $\mu$m.

9. The metal strip (1) according to any one of the preceding claims, **characterized in that** it is formed as a continuous strip.

10. Use of a metal strip (1) according to any one of claims 1 to 9, as a conveyor belt or processing belt for film casting.

11. A method for the manufacture of a metal strip (1) according to any one of claims 1 to 9, **characterized in that** a central strip section (5) and at least one lateral strip section (7, 8) disposed behind the central strip section (5) in the longitudinal direction of a sheet metal strip is separated out from the sheet metal strip and subsequently, a longitudinal connecting edge (11, 12) of the lateral strip section (7, 8) is connected to a longitudinal lateral edge (3, 4) of the central strip section (5).

**Revendications**

1. Bande de métal (1) comprenant une surface extérieure (21) et une surface intérieure (22) sur laquelle ou sur lesquelles plusieurs surfaces de mesurage de 625 mm$^2$ chacune, comprennent chacune de 0 à 25 inclusions non métalliques entre 2 $\mu$m et inférieures à 5 $\mu$m, de 0 à 6 inclusions non métalliques entre 5 $\mu$m et inférieures à 10 $\mu$m et de 0 à 4 inclusions non métalliques entre 10 $\mu$m et inférieures à 15 $\mu$m, **caractérisée en ce que** la matière métallique est choisie dans le groupe de X10CrNi1-8, X5CrNi18-10, X5CrNiMo17-12-2, X3CrNiMo13-4, CrNiCuTi15-7, Ck 67, Ti-II, X1NiCrMoCu25-20-5.

2. Bande de métal (1) selon la revendication 1, **caractérisée par** 0 à 3 inclusions entre 15 $\mu$m et inférieures à 20 $\mu$m par surface de mesurage.

3. Bande de métal (1) selon la revendication 1 ou 2, **caractérisée par** 0 à 3 inclusions entre 20 $\mu$m et inférieures à 25 $\mu$m par surface de mesurage.

4. Bande de métal (1) selon l'une quelconque des revendications précédentes, **caractérisée en ce que** celle-ci, vu dans la direction longitudinale, comprend plusieurs tronçons de bande (5, 7, 8) disposés les uns à côté des autres et reliés les uns aux autres.

5. Bande de métal (1) selon la revendication 4, **caractérisée en ce qu'**aux deux bords longitudinaux (3, 4) du tronçon de bande central (5), est disposé respectivement un tronçon de bande latéral (7, 8).

6. Bande de métal (1) selon l'une quelconque des revendications 4 à 5, **caractérisée en ce que** la largeur (19, 20) du tronçon de bande latéral (7, 8) est de jusqu'à 150 % de la largeur de bande (6) du tronçon de bande central (5).

7. Bande de métal (1) selon l'une quelconque des revendications 4 à 6, **caractérisée en ce que** les différents tronçons de bande (5, 7, 8) sont réalisés en la même matière d'un produit préliminaire commun.

8. Bande de métal (1) selon l'une quelconque des revendications précédentes, **caractérisée en ce qu'**au moins la surface extérieure (21) présente un polissage miroir sans structures avec une rugosité Ra < 0,02 $\mu$m ou Rz < 0,1 $\mu$m.

9. Bande de métal (1) selon l'une quelconque des revendications précédentes, **caractérisée en ce qu'**elle est formée à circulation sans fin.

10. Utilisation d'une bande de métal (1) selon l'une quelconque des revendications 1 à 9 comme bande de support ou bande de process pour le moulage de matériau en film.

11. Procédé de fabrication d'une bande de métal (1) selon l'une quelconque des revendications 1 à 9, **caractérisé en ce que**, dans une bande de tôle, sont découpés un tronçon de bande central (5) et au moins un tronçon de bande latéral (7, 8) disposé, dans la direction longitudinale de la bande de tôle, en aval du tronçon de bande central (5), et sont reliés ensuite un bord de liaison longitudinal (11, 12) du tronçon de bande latéral (7, 8) avec un bord de côté longitudinal (3, 4) du tronçon de bande central (5).

Fig.1

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 1020090110082
- WO 2006024526 A